# EUROPÄISCHE PATENTSCHRIFT

(11) **EP 3 689 690 B1**
(45) Veröffentlichungstag und Bekanntmachung des Hinweises auf die Patenterteilung: **14.12.2022**
(21) Anmeldenummer: 20150703.5
(22) Anmeldetag: 08.01.2020
(51) Int. Cl.: B60T 13/26, B60T 7/20, B60T 8/18, B60T 13/68

(54) **MIT PNEUMATISCHEM DRUCK ARBEITENDE BREMSANLAGE FÜR EINEN ANHÄNGER, LANDWIRTSCHAFTLICHER LASTENANHÄNGER SOWIE ZUGVERBUND, UMFASSEND EINE LANDWIRTSCHAFTLICHE ZUGMASCHINE UND EINEN DAMIT GEKOPPELTEN LANDWIRTSCHAFTLICHEN LASTENANHÄNGER**
BRAKING SYSTEM OPERATING UNDER PNEUMATIC PRESSURE FOR A TRAILER, AGRICULTURAL TRAILER AND TOWING ASSEMBLY COMPRISING AN AGRICULTURAL TRACTOR AND AN AGRICULTURAL TRAILER COUPLED THERETO
SYSTÈME DE FREINAGE FONCTIONNANT SOUS PRESSION PNEUMATIQUE POUR UNE REMORQUE, UNE REMORQUE AGRICOLE ET UN ENSEMBLE DE REMORQUAGE COMPRENANT UN TRACTEUR AGRICOLE ET UNE REMORQUE AGRICOLE QUI LUI EST ATTELÉE

(30) Priorität: 29.01.2019 DE 102019102136
(43) Veröffentlichungstag der Anmeldung: 05.08.2020
(73) Patentinhaber: HORSCH LEEB Application Systems GmbH, 94405 Landau an der Isar (DE)
(72) Erfinder: MALUSCHKA, Alexander, 94562 Oberpöring (DE); WINKLER, Klaus, 92421 Schwandorf (DE)
(74) Vertreter: Benninger, Johannes

(56) Entgegenhaltungen:
- CH-A- 307 230
- DE-A1- 3 216 407
- DE-A1- 3 639 149
- DE-A1-102006 007 575
- DE-C2- 3 639 149
- DE-U- 1 871 081
- US-A- 3 416 843

## Beschreibung

Die vorliegende Erfindung betrifft ein pneumatisches Bremssystem, einen damit ausgestatteten Anhänger sowie einen landwirtschaftlichen Zugverbund, umfassend eine Zugmaschine und wenigstens einen damit gekoppelten Anhänger mit pneumatischem Bremssystem.

Mit pneumatischem Druck arbeitenden Bremsanlagen für Anhänger sind aus DE 18 71 081 U, DE 36 39 149 A1, DE 32 16 407 A1 und US 3 416 843 A bekannt.

Im Zusammenhang mit landwirtschaftlichen Logistikaufgaben sind die unterschiedlichsten Transportfahrten zu bewältigen, die naturgemäß in vielen Fällen auf öffentlichen Straßen stattzufinden haben. Solche Transportfahrten können sowohl Überführungsfahrten für selbstfahrende oder an eine landwirtschaftliche Zugmaschine angehängte Arbeitsmaschinen. Vieler dieser Transportfahrten sind jedoch Lastentransporte, bei denen bspw. Feldfrüchte nach ihrer Ernte vom Acker zu vorgesehenen Lagerstätten oder zur Weiterverarbeitung transportiert werden, oder bei denen auszubringendes Saat- oder Pflanzgut, zu verteilender Dünger oder auszubringendes Pflanzenschutzmittel in Tanks oder Vorratsbehältern mitgeführt und zum Bestimmungsort gebracht werden soll.

Typische landwirtschaftliche Anhänger können Transportanhänger wie etwa Ladewagen, Gülletransport- und Verteilanhänger, gezogene Handelsdüngerstreuer o dgl. oder auch Arbeitsanhänger wie große gezogene Pflüge, abmontierte Schneidwerke von Mähdreschern oder Feldhäckslern, gezogene Sämaschinen oder zahlreiche andere landwirtschaftliche Arbeitsmaschinen sein.

Während in der entfernteren Vergangenheit nicht nur die Maschinen- und Fahrzeuggewichte vergleichsweise gering und zudem die Fahrgeschwindigkeiten bei diesen Transportfahrten auf der Straße noch kaum mehr als etwa 20 bis maximal 25 km/h betrugen, haben nicht nur die Fahrzeuge und Anhänger zunehmend an Größe und Gewicht zugelegt. Auch die mit modernen landwirtschaftlichen Fahrzeugen erzielbaren Fahrgeschwindigkeiten liegen inzwischen weitaus höher als in der Vergangenheit. Alle diese Faktoren tragen gemeinsam dazu bei, dass an die Leistungsfähigkeit und Zuverlässigkeit der heute verwendeten Bremssysteme deutlich höhere Anforderungen gestellt werden müssen, als dies in der Vergangenheit der Fall war.

Während Anhänger, die mit kleinen Achslasten und die mit relativ niedriger Fahrgeschwindigkeit bewegt werden, auch ohne eigene Bremssysteme betrieben werden können, da die notwendige Verzögerungen durch das Bremsen des Zugfahrzeuges erreicht wird, ist dies bei höheren Fahrgeschwindigkeiten und/oder größeren Achs- bzw. Anhängelasten des Anhängers keine sinnvolle Option, da hierbei die Gefahr besteht, die Betriebsbremsen des Zugfahrzeuges zu überlasten. Zudem besteht die Gefahr, dass es bei höheren Achs- und Anhängelasten zu einem Überschieben der Zugmaschine kommt, woraus eine erhebliche Unfallgefahr resultiert.

Im Nutzfahrzeugbau sind pneumatische Bremssysteme gebräuchlich, die über Bremskraftsteller zur beladungsabhängigen Variation des Bremsdrucks verfügen. Solche Bremskraftsteller werden auch im landwirtschaftlichen Transportwesen eingesetzt. Technische Bedingung hierfür ist allerdings, dass am Fahrzeug eine Möglichkeit vorhanden ist, die eine technische Ermittlung des Beladungsstandes erlaubt. Dies erfolgt in der Regel durch das Abgreifen der Komprimierung der Fahrzeugfederung oder ähnliches. Die Verwendung einer Federung ist allerdings bei bestimmten Typen von Arbeitsmaschinen wie z.B. von Sämaschinen technisch nicht möglich bzw. sinnvoll. Zudem kann auf keine andere Möglichkeit zurückgegriffen werden, den Beladungszustand abzugreifen, da hierdurch z.B. die Dichtigkeit von Behältern von Feldspritzen negativ beeinflusst werden kann. Da bei Anhängern ohne Fahrwerksfedern eine Eingangsstellgröße für einen herkömmlichen automatisch lastabhängigen Bremskraftregler fehlt, bleibt als sinnvolle Option der Einsatz eines bekannten herkömmlichen Bremskraftstellers, der allerdings einer manuellen Vorgabe des Beladungszustandes bedarf, insbesondere um eine praktikable Begrenzung der Bremskraft bei geringerer Beladung als der maximal zulässigen Beladung oder bei leerem Anhänger zu erreichen.

Ein solcher Bremskraftsteller funktioniert prinzipiell wie ein Druckbegrenzungsventil, d.h. er schneidet den eingesteuerten Druck bei einem bestimmten Wert ab, damit die Räder des gering beladenen oder leeren Anhängers nicht zum Überbremsen neigen. Bei voll beladenem Anhänger kann der Bremskraftsteller seinen Zweck erfüllen, da das Anhängerbremsventil die Bremsintensität steuert und der durch manuelle Vorgabe in seinem maximalen Wert veränderliche Bremskraftsteller bedarfsweise den maximalen Bremsdruck begrenzt, um das unerwünschte und der Fahrstabilität abträgliche Überbremsen der Anhängerräder zu verhindern.

Probleme können insbesondere dann entstehen, wenn der Anhänger gering beladen oder leer, wobei die entsprechende manuelle Einstellung des Bremskraftstellers gewählt ist, und wenn bei einer solchen Einstellung das Zugfahrzeug mit deutlich geringerer als maximal möglicher Verzögerung abgebremst wird, d.h. wenn der Fahrer die Bremse nur mit mittlerem oder geringerem Pedaldruck betätigt. Da bei einer solchen Bremsvorgabe des Fahrers der ausgesteuerte Bremsdruck des Anhängerbremsventils sich immer im Verhältnis zum Vorratsdruck regelt und der Bremskraftsteller den Druck abschneidet, kann es leicht zum Überbremsen oder zum Blockieren der Räder kommen. Somit besteht jederzeit das Risiko, dass bei Bremsungen mit geringerer Intensität keine Abbremsung des Anhängers innerhalb anzustrebender Grenzen möglich ist. Andererseits können insbesondere ungebremste Anhänger oder solche mit ungenauer Einstellung der Bremskraftsteller bei stärkeren Bremsungen auf das Zugfahrzeug "aufschieben".

Diese Bremswertbereiche, die bei unterschiedlichen Bremsintensitäten erreicht werden sollen, werden auch als einzuhaltende Bremsbänder bezeichnet. Genauer gesagt, bezeichnet ein Bremsband eine Vorgabe der Bandbreite für den Druckanstieg im Bremssystem in Abhängigkeit von der Verzögerung.

Nicht nur die höheren Anhängermassen und Fahrgeschwindigkeiten führen zu erhöhten Anforderungen. Auch Kompatibilitäten müssen beachtet werden, denn nicht alle älteren Zugmaschinen lassen sich mit neueren Anhängern problemlos betreiben, was auch umgekehrt - neue Zugmaschine und älterer Anhänger - gilt. Entsprechend der geltenden EU-Verordnung 167/2013 sowie der darauf Bezug nehmenden Verordnung (EU) 2015/68 über die Bremsanlagen (RVBR) müssen die Bremsanlagen von Traktoren und Anhängefahrzeugen bestimmte Kriterien erfüllen, womit nicht zuletzt eine erhöhte Verkehrssicherheit angestrebt wird. Entsprechend dieser aktuell geltenden europäischen Bestimmungen wurde das Bremsband, die Vorgabe der Bandbreite für den Druckanstieg in Abhängigkeit von der Verzögerung, neu festgelegt. Ein wichtiger Aspekt, der hierbei beachtet werden muss, liegt darin, dass dieses Bremsband entsprechend der geltenden Verordnung grundsätzlich auf Anhänger mit einer Eignung für Geschwindigkeiten von mindestens 40 km/h oder darüber ausgelegt ist.

Grundsätzlich könnte mit einem elektronischen System zur Verhinderung des Blockierens von Rädern beim stärkeren Bremsen, einem sog. EBS-Bremssystem, das unerwünschte Blockieren der Räder des Anhängers verhindert werden, womit die gewünschte Sicherstellung der Fahrsicherheit unter weitgehend allen in der Praxis auftretenden Betriebsbedingungen erreicht wäre.

Da allerdings solche elektronischen EBS-Bremssysteme in aller Regel relativ kostenintensiv, aufgrund der unverzichtbaren Systemintegration schwer nachzurüsten und zudem im landwirtschaftlichen Einsatz aufgrund der notwendigen Sensorkomponenten relativ störungsanfällig sind, hat es sich die vorliegende Erfindung zur Aufgabe gemacht, ein vergleichsweise einfach aufgebautes und damit auch kostengünstig realisierbares System für pneumatische Anhängerbremsen bzw. ein pneumatisch arbeitendes Anhängerbremssystem zur Verfügung zu stellen, das gegenüber bekannten pneumatischen Bremssystemen nur weniger zusätzlicher Komponenten bedarf, so dass es bedarfsweise leicht und mit geringem Montageaufwand bei bestehenden pneumatisch arbeitenden Bremssystemen nachgerüstet werden kann.

Diese Aufgabe wird mit den Gegenständen der unabhängigen Ansprüche gelöst. Merkmale vorteilhafter Weiterbildungen der Erfindung lassen sich den jeweiligen abhängigen Ansprüchen entnehmen.

Zur Lösung der genannten Aufgabe schlägt die vorliegende Erfindung eine mit pneumatischem Druck arbeitende Bremsanlage für einen Anhänger mit den Merkmalen des unabhängigen Anspruchs vor, wobei diese Bremsanlage insbesondere für einen landwirtschaftlich einsetzbaren oder eingesetzten Anhänger vorgesehen sein kann.

DE 18 71 081 U offenbart eine Bremsanlage nach dem Oberbegriff des unabhängigen Anspruchs.

Bei dem erfindungsgemäßen Bremssystem ist ein automatisch lastabhängiger Bremskraftregler zur bremskraftabhängigen Vorgabe einer Betätigungskraft von wenigstens zwei Rädern einer Anhängerachse zugeordneten Bremszylindern vorgesehen. Hierbei kann eine Eingangsstellgröße zur lastabhängigen Variation und/oder Drosselung eines Steuerdrucks der Bremszylinder in Abhängigkeit von einem Beladungszustand des Anhängers manuell vorgegeben werden.

Da der Anhänger, bei dem das Bremssystem eingesetzt wird, normalerweise über keine Federung verfügt, fehlt eine herkömmlicherweise vorhandene Eingangsstellgröße für den automatisch lastabhängigen Bremskraftregler, wie sie bspw. aus den Druckwerten von Federbälgen oder der Komprimierung der Achsfederung gefederter Anhänger abgeleitet werden könnte.

Stattdessen ist bei der erfindungsgemäßen Bremsanlage dem automatisch lastabhängigen Bremskraftregler ein manuell verstellbarer Bremskraftregler oder allgemein ein Druckregelventil vorgeschaltet, der eine manuell einstellbare Variation, insbesondere variable Drosselung der Eingangsstellgröße ermöglicht. Diese Eingangsstellgröße simuliert einen Federdruck eines - hier nicht vorhandenen - Federelements wie bspw. eines Faltenbalges und gibt dem automatisch lastabhängigen Bremskraftregler, dem sog. ALB einen simulierten Federungsdruck durch, der naturgemäß bei reduzierter Beladung geringer ist als bei voller Beladung. Mit Hilfe des gegenüber bekannten Bremsanlagen unverändert vorhandenen automatisch lastabhängigen Bremskraftreglers, dem jedoch nun erfindungsgemäß ein manuell verstellbarer Bremskraftregler vorgeschaltet ist, kann der Anhänger auch bei unterschiedlich starken Bremsungen jeweils im vorgeschriebenen Bremsband bleiben, ohne dass es zu ungewollten und der Fahrsicherheit abträglichen Blockierungen der Räder aufgrund nicht auf die Beladung abgestimmter Bremsdrücke kommen kann.

Die Eingangsstellgröße zur Ansteuerung des automatisch lastabhängigen Bremskraftreglers ist mittels des vorgeschalteten manuell verstellbaren Bremskraftreglers oder allgemein mittels des Druckregelventils variierbar. Im Interesse eines einfachen Aufbaus des pneumatischen Bremssystems kann insbesondere vorgesehen sein, dass der manuell verstellbare Bremskraftregler in einer Zweigleitung angeordnet ist, die über einen Vorratsdruck der Bremsanlage gespeist ist.

Eine weitere Variante zur manuellen Einstellung des Bremsdrucks besteht darin, ein ALB mit Gestänge zu verwenden und den notwendigen Bremshebelweg manuell durch eine verstellbare oder fest fixierbare Wegbegrenzung einzustellen bzw. zu begrenzen.

Eine sinnvolle Auslegung der Bremsanlage kann bspw. vorsehen, dass der oberhalb von vier bar liegende Vorratsdruck mittels des manuell verstellbaren Bremskraftreglers auf einen Steuer- oder Schaltdruck zwischen etwa zwei bis etwa vier bar reduziert werden kann.

Die vorliegende Erfindung bezieht sich weiterhin auf einen landwirtschaftlichen Lastenanhänger oder auf einen ähnlichen oder vergleichbaren Anhänger, der über mindestens eine Achse und mindestens ein gebremstes Rad verfügt, und der mit einer mit pneumatischem Druck arbeitenden Bremsanlage gemäß einer der zuvor beschriebenen Ausführungsvarianten ausgestattet ist. Wahlweise kann dieser landwirtschaftliche Lastenanhänger auch über mindestens zwei Achsen und mindestens vier gebremste Räder verfügen. Zudem bietet der Einsatz des erfindungsgemäßen Bremssystems besonders dann die erwähnten Vorzüge, wenn es sich bei dem landwirtschaftlichen Lastenanhänger um einen solchen handelt, bei dem die wenigstens eine Achse gegenüber einem Aufbau ungefedert ist, da hier die üblicherweise vorhandene Eingangsgröße für die beladungsabhängige und lastabhängige Variation des Bremsdrucks fehlt.

Schließlich umfasst die Erfindung auch einen landwirtschaftlichen Zugverbund, umfassend eine landwirtschaftliche Zugmaschine und einen daran angehängten und damit mechanisch sowie pneumatisch gekoppelten landwirtschaftlichen Lastenanhänger, wie er zuvor definiert wurde, der mit einer mit pneumatischem Druck oder mit hydraulischem Druck arbeitenden Bremsanlage gemäß einer der zuvor beschriebenen Ausführungsvarianten ausgestattet ist.

Im Folgenden sollen Ausführungsbeispiele die Erfindung und ihre Vorteile anhand der beigefügten Zeichnung näher erläutern.

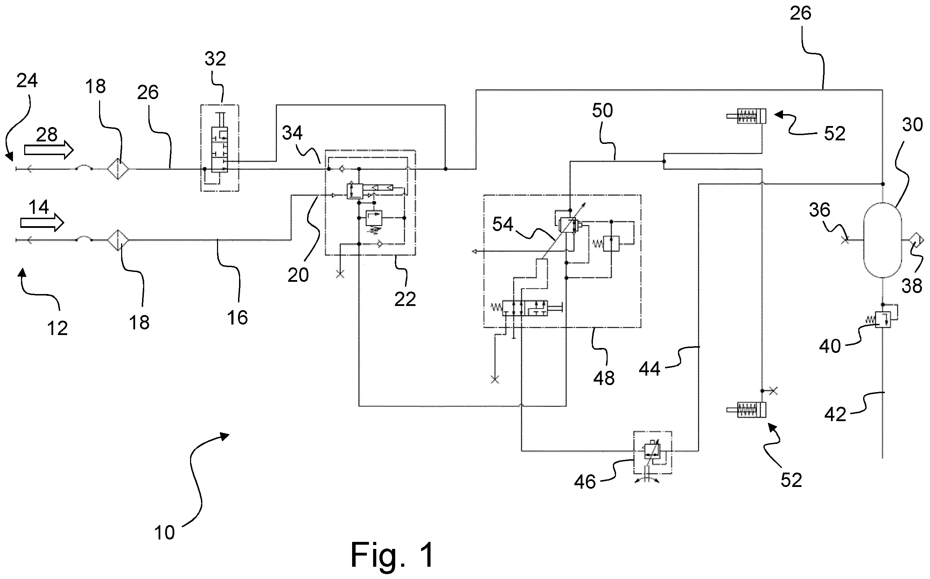

Fig. 1 zeigt ein schematisches Pneumatikschaltbild einer erfindungsgemäßen Druckluftbremsanlage für einen Anhänger.

Die dargestellte Ausführungsform soll lediglich ein praktisch einsetzbares Beispiel darstellen, wie die erfindungsgemäße Druckluftbremsanlage ausgestaltet sein kann, soll aber keine abschließende Begrenzung darstellen.

Die einzige Fig. 1 zeigt ein schematisches Pneumatikschaltbild einer erfindungsgemäßen Druckluftbremsanlage für einen Anhänger, der insbesondere für einen landwirtschaftlichen Einsatz vorgesehen sein kann. Da ein solcher Anhänger bzw. ein landwirtschaftlich eingesetzter Anhänger typischerweise über keine Federung an seinen zwei oder drei Achsen verfügt, fehlt eine wesentliche Stellgröße zur Ansteuerung eines normalerweise eingesetzten automatisch lastabhängigen Bremskraftreglers, wie er auch im vorliegenden Bremssystem eingesetzt werden soll. Allerdings wird er hier mit einem zusätzlichen manuell verstellbaren Bremskraftregler kombiniert, mit dessen Hilfe die nicht vorhandene Stellgröße auf manuellem Wege simuliert werden kann.

Die gesamte Bremsanlage ist hierbei mit der Bezugsziffer 10 gekennzeichnet. Der Anhänger selbst ist in der Darstellung nicht erkennbar, ebenso wenig wie das Zugfahrzeug, mit dem der Anhänger mechanisch, hydraulisch und pneumatisch sowie typischerweise auch elektrisch gekoppelt werden kann. Die übrigen Komponenten, die auf dem Schaltbild erkennbar sind, werden nachfolgend in ihrer Funktion sowie in ihrer Zusammenwirkung untereinander erläutert.

Die Bezugsziffer 12 bezeichnet in der Fig. 1 einen Steuerdruckanschluss, der in der Praxis oftmals auch als "Kupplungskopf gelb" bezeichnet und entsprechend farbig gekennzeichnet ist. Über diesen ersten Druckanschluss 12 wird die pneumatische Bremsanlage 10 mit Steuerdruck 14 versorgt, welcher der Betätigung der nachfolgend näher erläuterten Radbremsventile dient. Die Steuerdruckleitung 16 führt über einen Luftfilter 18 zu einem Steuerdruckanschluss 20 an einem hier mit der Bezugsziffer 22 bezeichneten Anhänger-Bremsventil.

Eine weitere pneumatische Schnittstelle der Bremsanlage 10 ist durch einen zweiten Druckanschluss 24 gebildet, der als Vorratsdruckanschluss 24 fungiert und im weiteren Zusammenhang auch als solcher bezeichnet wird. In der Praxis wird dieser Vorratsdruckanschluss 24 auch als "Kupplungskopf rot" bezeichnet und kann entsprechend farbig gekennzeichnet sein. Über den Vorratsdruckanschluss 24 wird über eine Vorratsdruckleitung 26, in der sich ebenfalls ein Luftfilter 18 befinden kann, Vorratsdruck 28 zugeführt, mit dem u.a. ein Druckbehälter 30 gespeist und befüllt wird.

Sowohl der Steuerdruck 14 als auch der Vorratsdruck 28 werden normalerweise von einem Zugfahrzeug geliefert, insbesondere über Anschlussleitungen, mit denen eine pneumatische Verbindung zum Bremssystem des Zugfahrzeuges hergestellt wird.

Die Vorratsdruckleitung 26 ist über ein Löseventil 32 zum Lösen der Betriebsbremse bei abgekoppeltem Steuerdruckanschluss 12 und abgekoppeltem Vorratsdruckanschluss 24 geführt, das in der Schaltstellung der Fig. 1 auf Durchgang geschaltet ist, so dass der Vorratsdruck 28 über einen Vorratsdruckanschluss 34 am Anhänger-Bremsventil 22 direkt zum Druckbehälter 30 geführt ist. Auf diese Weise wird bei anliegendem Vorratsdruck 28 durch das Anhängerbremsventil 22 über dessen Vorratsdruckanschluss 34 der Druckbehälter 30 befüllt. Der Vollständigkeit halber sei auf einen optionalen Prüfanschluss 36 sowie auf ein Entwässerungsventil 38 am Druckbehälter 30 hingewiesen. Sofern im Druckbehälter 30 temporär ein für die Bremsung ausreichend hoher pneumatischer Druck aufgebaut sein sollte, kann dieser über ein Überströmventil 40 und über die hier so bezeichnete Überströmleitung 42 abströmen, wobei dieser Überdruck einer weiteren Verwendung zugeführt werden kann, was hier jedoch nicht näher betrachtet werden soll.

Weiterhin zweigt von der Vorratsdruckleitung 26 in Nähe des Druckbehälters 30 eine Zweigleitung 44 ab, in der sich ein manuell verstellbarer Bremskraftregler 46 (oder allgemein Druckbegrenzungsventil) befindet, mit dessen Hilfe der effektive Steuerdruck für den lastabhängigen Bremskraftregler 48 manuell verstellt werden kann. Je nach Beladungszustand des Anhängers kann der Bremskraftregler 46 bspw. zwischen mehreren Schaltstellungen verstellt werden, so dass für den Beladungszustand der Maschine der korrekte Bremsdruck eingestellt werden kann. Die Zweigleitung 44, in der sich der manuell verstellbare Bremskraftregler 46 befindet, mündet in einem an sich bekannten automatisch lastabhängigen Bremskraftregler 48, einem sog. pneumatischen ALB 48, dessen Ausgangsleitung 50 zu den Bremszylindern 52 einer Achse des Anhängers führt.

Aus Vereinfachungsgründen zeigt die Fig. 1 lediglich zwei Bremszylinder 52 einer Achse des Anhängers, der wahlweise zwei oder drei Achsen mit jeweils den Rädern aller Achsen zugeordneten gleichartigen Bremszylindern 52 aufweisen kann, die in entsprechender Weise vom ALB 48 mit variabel einstellbarem Bremsdruck beaufschlagt werden können. Die Bremszylinder 52 sorgen für eine gleichmäßige und vom jeweiligen Steuerdruck abhängige Betätigung der Radbremsen des Anhängers (hier nicht gezeigt).

Der manuell einstellbare Bremskraftregler 46 wirkt in der hier gewählten Verschaltung als Druckbegrenzungsventil für den Steuerdruck des pneumatisch gesteuerten automatischen Lastregelventils (Drossel- oder Servoventil), da er dem automatisch lastabhängigen Bremskraftregler 48 vorgeschaltet ist und somit den von diesem vorgebbaren Bremsdruck in Abhängigkeit von der manuellen Einstellung bedarfsweise absenkt. Mit Hilfe des solchermaßen mit dem automatisch lastabhängigen Bremskraftregler 48 kombinierten manuell einstellbaren Bremskraftreglers 46, der eingangsseitig mit der Vorratsdruckleitung 26 des Druckbehälters 30 verbunden ist, kann ein Federdruck eines hier aufgrund des eingesetzten Anhängers mit nicht gefederten Achsen (hier nicht dargestellt) simuliert werden.

Der insbesondere für einen landwirtschaftlichen Einsatz vorgesehene Anhänger, der typischerweise über keine Federung an seiner einen Achse oder an seinen zwei oder drei Achsen verfügt, kann durch diese bauliche Abweichung von Gütertransportanhängern, wie sie etwa für den straßengebundenen Gütertransport eingesetzt werden, dem in der erfindungsgemäßen Bremsanlage 10 eingesetzten automatisch lastabhängigen Bremskraftregler 48 eine sinnvolle Stellgröße liefern, wie sie normalerweise aus dem Federdruck eines Federbalges hergeleitet und abgegriffen werden kann, sofern der Anhänger bspw. mit einer Luftfederung mit Federbälgen ausgestattet wäre. Stattdessen wird der automatisch lastabhängige Bremskraftregler 48 in der gezeigten Weise mit dem zusätzlich vorgeschalteten manuell verstellbaren Bremskraftregler 46 kombiniert, mit dessen Hilfe die nicht aus dem pneumatischen Druck des Federbalges des belasteten oder nicht belasteten Anhängers ableitbare Stellgröße 54 auf manuellem Wege simuliert werden kann.

Die Fig. 1 lässt diese Eingangsstellgröße 54 als Ausgangsdruck des manuell verstellbaren Bremskraftreglers 46 erkennen, die dem ALB 48 zur Verfügung gestellt wird, um die Bremszylinder 52 in gewünschter Weise anzusteuern.

Im Ergebnis kann mittels der gezeigten Ausführungsvariante der erfindungsgemäßen Bremsanlage 10 gewährleistet werden, dass durch entsprechende Einstellungen des manuell verstellbaren Bremskraftreglers 46, die sich an der jeweiligen Beladung des Anhängers zu orientieren hat, die Räder des Anhängers auch bei verschieden starken Bremsvorgängen jeweils im vorgeschriebenen Bremsband bleiben.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 10: Bremsanlage, Druckluftbremsanlage, pneumatische Bremsanlage
- 12: erster Druckanschluss, Steuerdruckanschluss ("Kupplungskopf gelb")
- 14: Steuerdruck
- 16: Steuerdruckleitung
- 18: Luftfilter
- 20: Steuerdruckanschluss
- 22: Anhänger-Bremsventil
- 24: zweiter Druckanschluss, Vorratsdruckanschluss ("Kupplungskopf rot")
- 26: Vorratsdruckleitung
- 28: Vorratsdruck
- 30: Druckbehälter, Druckkessel
- 32: Löseventil (Feststellbremse)
- 34: Vorratsdruckanschluss
- 36: Prüfanschluss (Druckbehälter)
- 38: Entwässerungsventil (Druckbehälter)
- 40: Überströmventil
- 42: Überströmleitung
- 44: Zweigleitung
- 46: manuell verstellbarer Bremskraftregler
- 48: automatisch lastabhängiger Bremskraftregler, ALB
- 50: Ausgangsleitung
- 52: Radbremszylinder
- 54: Stellgröße, Eingangsstellgröße

## Patentansprüche

1. Mit pneumatischem Druck arbeitende Bremsanlage (10) für einen Anhänger, insbesondere für einen landwirtschaftlich einsetzbaren oder eingesetzten Anhänger, bei dem ein automatisch lastabhängiger Bremskraftregler (48) zur bremskraftabhängigen Vorgabe einer Betätigungskraft von wenigstens zwei Rädern einer Anhängerachse zugeordneten Bremszylindern (52) vorgesehen ist, wobei eine Eingangsstellgröße (54) zur lastabhängigen Variation und/oder Drosselung eines Steuerdrucks der Radbremszylinder (52)in Abhängigkeit von einem Beladungszustand des Anhängers manuell vorgebbar ist, **dadurch gekennzeichnet, dass** dem insbesondere pneumatisch angesteuerten automatisch lastabhängigen Bremskraftregler (48) ein manuell verstellbarer Bremskraftregler (46) oder ein Druckbegrenzungsventil vorgeschaltet ist, der eine manuell einstellbare Variation in Form einer gestuften oder variablen Begrenzung der Eingangsstellgröße (54) ermöglicht.

2. Bremsanlage (10) nach Anspruch1, bei der die Eingangsstellgröße (54) zur Ansteuerung des automatisch lastabhängigen Bremskraftreglers (48) mittels des vorgeschalteten manuell verstellbaren Bremskraftreglers (46) oder des Druckbegrenzungsventils variierbar ist.

3. Bremsanlage (10) nach einem der Ansprüche 1 oder 2, bei dem der manuell verstellbare Bremskraftregler (46) oder das Druckbegrenzungsventil in einer Zweigleitung (44) angeordnet ist, die über einen Vorratsdruck (28) der Bremsanlage (10) gespeist ist.

4. Bremsanlage (10) nach Anspruch 3, bei dem der Vorratsdruck (28) mittels des manuell verstellbaren Bremskraftreglers (46) auf einen Steuer- oder Schaltdruck manuell auf den benötigten Bremsdruck reduzierbar ist.

5. Landwirtschaftlicher Lastenanhänger, der über mindestens eine Achse und wenigstens zwei Räder verfügt, und der mit einer mit pneumatischem Druck arbeitenden Bremsanlage (10) gemäß einem der Ansprüche 1 bis 4 ausgestattet ist.

6. Landwirtschaftlicher Lastenanhänger, der über mindestens zwei Achsen und mindestens vier gebremste Räder verfügt, und der mit einer mit pneumatischem Druck arbeitenden Bremsanlage (10) gemäß einem der Ansprüche 1 bis 4 ausgestattet ist.

7. Landwirtschaftlicher Lastenanhänger nach Anspruch 6, bei dem wenigstens eine Achse gegenüber einem Aufbau ungefedert ist, und/oder bei dem keine Möglichkeit vorhanden ist, einen Füllstand oder Beladungszustand des Anhängers automatisch zu erfassen.

8. Zugverbund, umfassend eine landwirtschaftliche Zugmaschine und einen daran angehängten und damit mechanisch sowie pneumatisch gekoppelten landwirtschaftlichen Lastenanhänger gemäß einem der Ansprüche 5 bis 7, der mit einer mit pneumatischem Druck arbeitenden Bremsanlage (10) gemäß einem der Ansprüche 1 bis 4 ausgestattet ist.

## Claims

1. A pneumatic-pressure operated brake system (10) for a trailer, in particular, for an agriculturally usable or used trailer, in which an automatic load-dependent brake pressure regulator (48) is provided for the brake-force dependent specification of an actuating force of brake cylinders (52) assigned to at least two wheels of a trailer axle, wherein an input control variable (54) is manually specifiable for the load-dependent variation and/or throttling of a control pressure of the wheel brake cylinders (52) according to a loading state of the trailer, **characterised in that** a manually adjustable brake pressure regulator (46) or a pressure control valve is provided upstream of the automatic load-dependent brake pressure regulator (48), in particular, the pneumatically actuated automatic load-dependent brake pressure regulator(48), which manually adjustable brake pressure regulator (46) or pressure control valve enables a manually adjustable variation in the form of a staged or variable limitation of the input control variable (54).

2. The brake system (10) according to claim 1, in which the input control variable (54) for the actuation of the automatic load-dependent brake pressure regulator (48) is variable by means of the manually adjustable brake pressure regulator (46) or the pressure control valve provided upstream.

3. The brake system (10) according to one of the claims 1 or 2, in which the manually adjustable brake pressure regulator (46) or the pressure control valve is arranged in a branch line (44), which is supplied via a supply pressure (28) of the brake system (10).

4. The brake system (10) according to claim 3, in which the supply pressure (28) is manually reducible to the required brake pressure by means of the brake pressure regulator (46), which is manually adjustable to a switching or brake pressure.

5. An agricultural cargo trailer, having at least one axle and at least two wheels, and being equipped with a pneumatic-pressure operated brake system (10) according to one of the claims 1 to 4.

6. An agricultural cargo trailer, having at least two axles and at least four braked wheels, and being equipped with a pneumatic-pressure operated brake system (10) according to one of the claims 1 to 4.

7. The agricultural cargo trailer according to claim 6, in which at least one axle is unsprung relative to a body, and/or in which there is no possibility for automatically detecting a fill level or loading state of the trailer.

8. A tractor-trailer combination, comprising an agricultural towing machine and an agricultural cargo trailer according to one of the claims 5 to 7, which is hitched and thus mechanically as well as pneumatically coupled to the towing machine, the cargo trailer being equipped with a pneumatic-pressure operated brake system (10) according to one of the claims 1 to 4.

## Revendications

1. Système de freinage (10) pour une remorque, fonctionnant sous pression pneumatique, notamment pour une remorque utilisée ou susceptible d'être utilisée en agriculture, dans lequel il est prévu un régulateur de force de freinage dépendant automatiquement de la charge (48) pour prédéfinir, en fonction de la force de freinage, une force d'actionnement de cylindres de frein (52) associés à au moins deux roues d'un essieu de remorque, une grandeur de réglage d'entrée (54) pour la variation en fonction de la charge et/ou l'étranglement d'une pression de commande desdits cylindres de frein de roue (52) pouvant être prédéfini manuellement en fonction d'un état de chargement de ladite remorque, **caractérisé en ce qu'**en amont du régulateur de force de freinage dépendant automatiquement de la charge (48) et commandé notamment pneumatiquement est monté un régulateur de force de freinage à réglage manuel (46) ou une soupape de limitation de pression qui permet une variation réglable manuellement sous la forme d'une limitation échelonnée ou variable de ladite grandeur de réglage d'entrée (54).

2. Système de freinage (10) selon la revendication 1, dans lequel la grandeur de réglage d'entrée (54) pour la commande du régulateur de force de freinage dépendant automatiquement de la charge (48) au moyen dudit régulateur de force de freinage à réglage manuel (46) monté en amont ou de la soupape de limitation de pression peut être variée.

3. Système de freinage (10) selon l'une quelconque des revendications 1 ou 2, dans lequel le régulateur de force de freinage à réglage manuel (46) ou la soupape de limitation de pression est agencé dans une conduite de dérivation (44) alimentée par une pression de réserve (28) du système de freinage (10).

4. Système de freinage (10) selon la revendication 3, dans lequel la pression de réserve (28) peut être réduite manuellement à la pression de freinage nécessaire au moyen dudit régulateur de force de freinage à réglage manuel (46) à une pression de commande ou de commutation.

5. Remorque de chargement agricole qui dispose d'au moins d'un essieu et d'au moins deux roues, et qui est équipée d'un système de freinage (10) fonctionnant sous pression pneumatique selon l'une quelconque des revendications 1 à 4.

6. Remorque de chargement agricole qui dispose d'au moins deux essieux et d'au moins quatre roues avec frein, et qui est équipée d'un système de freinage (10) fonctionnant sous pression pneumatique selon l'une quelconque des revendications 1 à 4.

7. Remorque de chargement agricole selon la revendication 6, dans laquelle au moins un essieu est sans suspension par rapport à une carrosserie et/ou dans laquelle il n'y a aucune possibilité de détecter automatiquement un niveau de remplissage ou état de chargement de ladite remorque.

8. Ensemble de traction routier, comprenant un tracteur routier agricole et une remorque de chargement agricole qui y est attachée et couplée de manière mécanique ainsi que pneumatique, selon l'une quelconque des revendications 5 à 7, qui est équipée d'un système de freinage (10) fonctionnant sous pression pneumatique selon l'une quelconque des revendications 1 à 4.
